# EUROPEAN PATENT SPECIFICATION

(11) **EP 1 730 653 B1**
(45) Date of publication and mention of the grant of the patent: **08.10.2008**
(21) Application number: 05716994.8
(22) Date of filing: 10.03.2005
(51) Int. Cl.: G06F 17/21, G06K 15/02, G06F 17/22

(54) **SYSTEMS AND METHODS FOR IDENTIFYING COMPLEX TEXT IN A PRESENTATION DATA STREAM**
SYSTEME UND VERFAHREN ZUM IDENTIFIZIEREN EINES KOMPLEXEN TEXTS IN EINEM PRÄSENTATIONS-DATENSTROM
SYSTEMES ET PROCEDES PERMETTANT D'IDENTIFIER UN TEXTE COMPLEXE DANS UN FLUX DE DONNEES DE PRESENTATION

(30) Priority: 11.03.2004 US 798045
(43) Date of publication of application: 13.12.2006
(73) Proprietor: International Business Machines Corporation, Armonk, NY 10504 (US)
(72) Inventor: HOHENSEE, Reinhard Heinrich, Boulder, Colorado 80304 (US); LUEBBE, Terry Scott, Mantorville, Minnesota 55955 (US); MADER, Eric Richard c/o IBM United Kingdom Ltd, Hampshire SO21 2JN (GB); STONE, David, Longmont, Colorado 80503 (US); UMAMAHESWARAN, Vettakkorumakankavu, Ajax, Ontario L1T3J2 (CA); VARGA, John Thomas, Longmont, Colorado 80503-8303 (US)
(74) Representative: Bibby, William Mark
(86) International application number: PCT/EP2005/051091
(87) International publication number: WO 2005/088470

(56) References cited:
- US-A- 5 418 718
- US-A1- 2002 143 825
- US-A1- 2004 257 591
- US-B1- 6 583 789
- DÜRST ET AL.: "Unicode in XML and other Markup Languages" DRAFT UNICODE TECHNICAL REPORT, [Online] no. 20, 23 June 2000 (2000-06-23), XP002347395 Retrieved from the Internet: URL:http://www.unicode.org/reports/tr20/tr 20-4.html> [retrieved on 2005-09-30]

## Description

### Technical Field

The present invention relates to the field of printing systems, and more particularly to a printing system that processes complex text that includes character strings that do not necessarily render in a one-to-one mapping between code points and glyphs.

The present invention is related to the following U.S. Patent Application:

US patent application Publication No. 2004 0257591A1 (Serial No. 10/601,025; Attorney Docket No. BLD920030006US1) entitled "METHOD AND SYSTEM FOR RENDERING UNICODE COMPLEX TEXT DATA IN A PRINTER" filed June 20, 2003.

### Background Art

Computer systems can generate output information in several ways, including video output and "hard copy" or printed output. Although more and more output consists of evanescent video screens, a large amount of data is still printed on paper and other permanent media. Therefore, there is a need for efficiently describing printed data and then printing a hard copy page from the print description. The printing is often performed by high-speed, high-volume printing systems which receive streams of encoded print data and utilize "intelligent" printers that can store commands and data. Such encoded print streams often include data for many printed pages. For example, a telephone company might print all of its telephone bills for a specified week with a single print stream. Each page in the print stream may be a telephone bill for a particular customer.

Such printing and presentation systems in modem enterprise data processing environments, typically support document rendering in a multiplicity of languages. An encoding standard, called, Unicode, defines a comprehensive character representation capable of representing all of the world's languages, including non-Roman languages, such as Chinese, Japanese and Hindi. (The Unicode standard is published by the Unicode Consortium, Mountain View, California.) The Unicode standard can encode more than one million characters. However, the capability to render all of the world's languages presents additional challenges for a printing and presentation system. Certain language groups, for example, Arabic, Indic and Thai may include so-called complex text in which a traditional one-code-point-to-one-glyph rendering may not be applicable. Complex text can occur in character strings for several reasons. The language may be bi-directional whereby the print direction switches in the middle of the string. For example, in Arabic and Hebrew, alphabetic characters are written right-to-left and numbers are written left-to-right. Other language characteristics that give rise to complex text include context dependent character shapes or positions, ligatures, special forms for which there is no Unicode code point (but for which a glyph may exist in the font), and splitting or combining of characters depending on context. Processing complex text is thus language dependent and generally employs a layout engine to analyze the text and generate the proper glyph indices and glyph positions for rendering.

In particular, the processing of Unicode complex text may be performed by a layout engine in the printer. (See the above referenced commonly-owned United States Patent Application, Publication No. 2004 0257591A1 (Serial No. 10/601,025) entitled "METHOD AND SYSTEM FOR RENDERING UNICODE COMPLEX TEXT DATA IN A PRINTER"). This has the advantage that the Unicode text is preserved in the print stream which in turn allows the Unicode text in the print stream to be sorted, searched, indexed, etc. However, invoking a layout engine in the printer can be processing intensive, and thus may adversely impact printer performance.
US 2002/0143825 A1 (FEINBERG), published on October 3 2002 (2002-10-03), discloses a method of ensuring the correct printing of complex text by detecting and marking complex text passages.
US 6 583 789 B1 (CARLSON ET AL.), published on June 24 2003 (2003-06-24) discusses selective reduction of print quality for glyphs that do not require high-quality printing, but this is restricted to simple (Latin) glyphs and explicitly excludes complex glyphs from print-quality reduction.

Therefore, there is a need in the art for mechanisms for controlling the printing of Unicode complex text, and the integration of the printing of complex text integrated with non-complex text. In particular, there is a need in the art for systems and methods for selectively invoking a layout engine to process Unicode complex text. Additionally, there is a need for such mechanism to selectively disable the rendering of complex text at the job submission level to reduce the cost of rendering such text if the job requirements do not require the proper rendering of the complex text.

### Disclosure of Invention

According to one embodiment of the invention, there is provided a method of identifying complex text. If a presentation data stream contains a complex text string, a preselected control in the presentation data stream is inserted before the complex text string. The preselected control corresponds to a plurality of parameters for controlling processing of complex text. Each parameter is represented by a corresponding value in the preselected control. A first parameter has a value indicating a control type for controlling processing of complex text, and a second parameter takes one or more values for enabling and disabling the processing of complex text.

There is also provided, in another embodiment, a method for processing complex text. The method includes, responsive to a first predetermined type of control in a presentation data stream, determining if a first type of complex text processing is enabled.
If the first type of complex text processing is enabled, the first type of complex text processing is applied to a complex text string succeeding the first predetermined type of control in the presentation data stream. The first predetermined type of control includes a first parameter represented by a corresponding value in the first predetermined type of control for controlling the first type of complex text processing.

The foregoing has outlined rather generally the features and technical advantages of one or more embodiments of the present invention in order that the detailed description of the invention that follows may be better understood. Additional features and advantages of the invention will be described hereinafter which may form the subject of the claims of the invention.

### Brief Description of the Drawings

Embodiments of the invention are described below in more detail, by way of example,with reference to the accompanying drawings in which:

FIGURE 1 illustrates a printing system in accordance with an embodiment of the present invention;

FIGURE 2 illustrates, in flow chart form, a methodology for identifying complex text in a Unicode data stream in accordance with an embodiment of the present invention;

FIGURE 3 illustrates, in flow chart form, a methodology for processing Unicode complex text in accordance with an embodiment of the present invention;

FIGURE 4 illustrates, in flow chart form, a methodology for bidirectional (bidi) Unicode text processing in accordance with an embodiment of the present invention;

FIGURE 5 illustrates, in flow chart form, a methodology for Unicode glyph processing in accordance with an embodiment of the present invention;

FIGURE 6 illustrates, in flow chart form, a methodology for determining text position in accordance with an embodiment of the present invention; and

FIGURE 7 illustrates, in block diagram form, a data processing system that may be used to perform the processes of FIGURES 3-6.

### Mode for the Invention

In the following description, numerous specific details are set forth to provide a thorough understanding of the present invention. For example, particular structured field formats may be referred so as to illustrate the present inventive principles. However, it will be apparent to those skilled in the art that the present invention may be practiced without such specific details. In other instances, well-known circuits have been shown in block diagram form in order not to obscure the present invention in unnecessary detail. For the most part, details considering timing considerations and the like have been omitted inasmuch as such details are not necessary to obtain a complete understanding of the present invention and are within the skills of persons of ordinary skill in the relevant art.

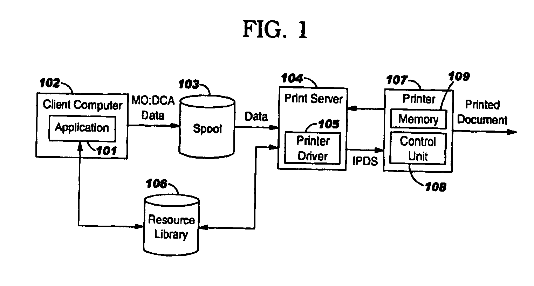

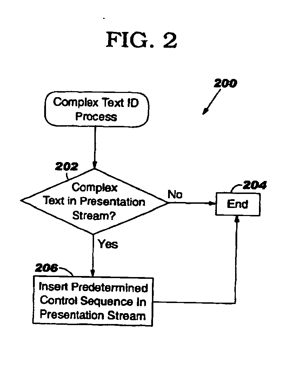

FIGURE 1 illustrates an embodiment of the present invention of a printing system 100 for printing a document produced by an application program 101 (i.e., a "print document") on a client computer 102. A more detailed description of client 102 is described further below in association with Figure 2. The application program 101 running on client 102 generates a data stream that is a formatted, platform and device independent logical description of the print document. One known specification of such a logical description of a data stream utilized for printing is known as MO:DCA (Mixed Object Document Content Architecture), described in detail in I.B.M. Mixed Object Document Content Architecture Reference number SC31-6802.

In particular, MO:DCA defines the data stream used by applications to describe documents and object envelopes for interchange with other applications and application services. In the MO:DCA architecture, a document represents the highest level of a document component hierarchy. Pages contain the data objects that constitute a presentation document, that is, a document that has been formatted and intended for presentation, for example, on a printer or display. Data objects include data to be presented and directives required to present it. Example data objects include graphic objects that represent pictures generated by a computer, image objects that represent image information such as scanned pictures and presentation text objects that represent textual information. Each of these objects representations may be incorporated in a MO:DCA data stream in accordance with a corresponding object content architecture. In particular, the Presentation Text Object Content Architecture (PTOCA) will be discussed further hereinbelow. (PTOCA is described in detail in the IBM Presentation Text Object Content Architecture Reference, SC31-6308.) In addition to data objects, a document may include print control objects that contain formatting, layout and resource-mapping information used to present the document pages on physical media. This information may be included in a set of structured fields in the MO:DCA data stream referred to a "form map" or "formdef." (A form map is similar to a "job ticket," a data structure that is a container for information about a print job, such as settings of a destination printer, description of a paper type, etc.) Data may be conveyed within a structured field byte-sequence referred to as a "triplet." A MO:DCA triplet is a self-identifying parameter that includes a one-byte length field, a one-byte unique identifier, and a sequence of data bytes (the number of which is determined from the length field). A MO:DCA triplet for controlling the printing of Unicode complex text specified in accordance with the present inventive principles will be described further hereinbelow.

Printing system 100 further comprises a spool 103 for both receiving and spooling the data stream representing the print document from the application program 101. Once received by spool 103, the data stream is transmitted to a print server 104 that converts the data stream to a device specific data stream by means of a printer driver 105, and a resource library 106 containing resources, such as fonts, and print control objects that are required to print the data stream. Application program 101 may be configured to access and use resource library 106 to format the document. In the case where the MO:DCA format is used, the resulting data stream generated by print server 104 is called an Intelligent Printer Data Stream (IPDS). (IPDS is described in the IBM Intelligent Printer Data Stream Reference, S544-3417.) Once the data stream is formatted, it is directed to a printer 107 for producing a printed document.

Printer 107 may have a control unit 108 with which print server 104 can communicate and an internal memory 109. When IPDS is used, the communication between print server 104 and printer 107 is bi-directional. For example, print server 104 may inquire of printer 107 whether a particular resource, such as a font, is resident in the printer memory 109. If the resource is not present, print server 104 may retrieve the font from resource database 106 and download it using the IPDS data stream into printer memory 109. The resource may then be available for future use. Subsequently, when print data that refers to the downloaded resource is received by printer 107, printer 107 will combine the resource with the data and provide the combination to a conventional Rasterizing Image Processor (called a "RIP", not shown in Figure 1) which converts the data into a printable raster image. Control unit 108 coupled to memory 109 may be configured to execute the instructions of the rasterizer program.

Refer now to FIGURE 2, illustrating in flow chart form, a process200 for identifying complex text in a presentation data stream. Note that the flowcharts provided herein are not necessarily indicative of the serialization of operations being performed in an embodiment of the present invention. Many of the steps performed within these flowcharts may be performed in parallel. The flowcharts are meant to designate those considerations that may be performed to identify and process complex text in accordance with the present inventive principles. It is further noted that the order presented is illustrative and does not necessarily imply that the steps must be p erformed in the order shown.

In step202, it is determined if complex text appears in a presentation data stream. This may be performed by an analysis of the Unicode code points appearing in the presentation data. For example, the presence of complex text in a data stream may be determined by examining the Unicode code points. Scripts that contain complex text, such as Hindi and Arabic are assigned well-defined code point ranges within the Unicode standard. Thus, a test of the code point values can determine if the code points fall within the range of a complex script. This is additionally discussed in the aforementioned co-pending commonly owned United States Patent Application Publication No. 2004 0257591A1 (Serial No. 10/601,025) entitled "METHOD AND SYSTEM FOR RENDERING UNICODE COMPLEX TEXT DATA IN A PRINTER,".

Another way to determine the presence of complex text is with *a priori* knowledge of the data. For example, the print application that generates the documents may incorporate "intelligence" that recognizes that the database from which data is being pulled to generate the document contains only English, say English names to populate a billing statement.

Conversely, if the database contains information to be placed into the print file that may be specified in a complex script, the data may be tagged as complex text and the printer processes both the complex scripts and the non-complex scripts accordingly. If there is no complex text in the presentation stream, process200 ends, step204. Otherwise, in step206 a predetermined control sequence is inserted into the presentation stream. A control sequence which may be used in conjunction with step206 is illustrated in Table I.

**Table 001**

| **Offset** | **Type** | **Name** | **Range** | **Meaning** |
|---|---|---|---|---|
| 0 | CODE | PREFIX | X'2B' | Control sequence prefix |
| 1 | CODE | CLASS | X'D3' | Control sequence class |
| 2 | UBIN | LENGTH | X'10' | Control sequence length |
| 3 | CODE | TYPE | X'6A' | Control sequence function type |
| 4 | CODE | UCTVERS | X'01' | UCT version level |
| | | | | X'01' Base level |
| 5 | | | | Reserved |
| 6-7 | UBIN | CTLNGTH | 0-32767 | Length of complex text data that |
| | | | | follows this control sequence |
| 8 | BITS | CTFLGS | Described | Complex text processing control |
| | | | below | flags |
| 9 | | | | Reserved |
| 10 | CODE | BIDICT | X'02', | Bidi layout processing control: |
| | | | X'04', | X'02' Enable, default paragraph |
| | | | X'05', | direction is L- >R |
| | | | X'12', | X'04' Enable; set p.d. L->R |
| | | | X' 13', | X'05' Enable; set p.d. R->L |
| | | | X'20', | X'12' Enable; p.d. set from |
| | | | X'22', | previous UCT default L->R |
| | | | X'23' | X'13' Enable; paragraph direction |
| | | | | set from previous UCT default R-> |
| | | | | L |
| | | | | X'20' Disable |
| | | | | X'22' Disable; text direction L->R |
| | | | | X'23' Disable; text direction R-> |
| | | | | L |
| 11 | CODE | GLYPHCT | X'01', X'20' | Glyph processing control: |
| | | | | X'01'Enable |
| | | | | X'20' Disable |
| 12-15 | | | | Reserved |
| 16-17 | SBIN | ALTIPOS | X'8000' | Alternate current inline position |
| | | | X'7FFF' | |

The control sequence may be incorporated in a presentation text object in accordance with the Presentation Text Object Content Architecture (PTOCA) previously noted. As previously discussed, a presentation text object is a data object for representing text which has been prepared for presentation. It may include an ordered string of characters such as graphic symbols, numbers and letters suitable for representing coherent information. Text which has been prepared for presentation has been reduced to a form through explicit specification of the characters and their placement in the presentation space.

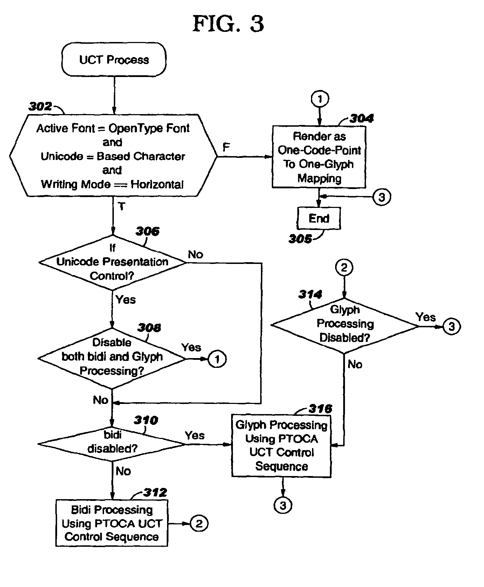

Additionally, control sequences which designate specific control functions may be embedded within the text. These functions apply certain characteristics to the text when it is presented. The collection of graphic characters and control codes may be referred to as presentation text and an object containing presentation text may be referred to as a presentation text object. A control sequence such as the control sequence illustrated in Table I and described further herein below, may be inserted in step206 of process200 to identify the subsequent text strings as complex text, and to integrate the processing of complex text into the existing presentation environment. In particular, the control sequence, which may be referred to as a Unicode Complex Text (UCT) control sequence may be used to enable and disable the processing of complex text, as discussed hereinbelow in conjunction with FIGURES3-6. Additionally, the UCT control sequence may be used to selectively enable bidirectional (bidi) layout processing and/or glyph processing, also discussed hereinbelow in conjunction with FIGURES3-6.

Refer now to FIGURE3 illustrating, in flowchart form, a process300 for processing Unicode complex text in accordance with an embodiment of the present invention.

If, in step 302, either the active font is not an OpenType font, or the data is not encoded in a Unicode-based character set, or the writing mode is not horizontal, the code points following the control sequence are not processed as complex text. (OpenType font is a cross-platform font file format, that is an extension of the TrueType scalable font technology.) (Although step 302 is described in conjunction with Unicode-based character sets and OpenType font, the present inventive principles may be applied in conjunction with any predetermined font type and character encoding.) Thus, in step 304, code points are rendered in a one code point to one glyph fashion, as in normal text processing. Process 300 then terminates in step 305. Otherwise, the complex text is processed in accordance with the parameters set in data stream control sequences as described in conjunction with steps 306-314, below.

As previously discussed, a particular task may not require the proper rendering of complex text within the data stream. For example, the submitter may wish to turn off the processing of complex text if the job is being printed for proofing purposes, say. Therefore, in accordance with the present invention, a MO:DCA form map may be used to disable the rendering of complex text in a presentation data stream at the time of submission. A MO:DCA triplet (which may be referred to as the UCT Processing Control Triplet) that may be incorporated in the form map of a MO:DCA data stream to disable the rendering of complex text is defined in Table II. The syntax of the UCT Processing Control Triplet conforms to the structure of MO:DCA triplets described above.

**Table 2**

| Offset | Type | Name | Range | Meaning | M/O | Ext |
|---|---|---|---|---|---|---|
| 0 | UBIN | Tlength | 5 | Length of the triplet, | M | X'02' |
| | | | | including Tlength | | |
| | | | | Identifies the Unicode | | |
| 1 | CODE | Tid | X'90' | Complex Text Processing | M | X'00' |
| | | | | Control triplet | | |
| | | | | Unicode bidi layout | | |
| | | | X'00' -X '01 | processing control. | | |
| 2 | CODE | BiDiCtl | | X'00' Defer to PTOCA | M | X'06' |
| | | | | controls | | |
| | | | | X'01' Disable bidi layout | | |
| | | | | processing | | |
| | | | | Unicode glyph processing | | |
| 3 | CODE | GlyphCtl | X'00-X' 01' | control X'00' Defer to PTOCA controls X'01' | M X'06' | X'06' |
| | | | | Disable glyph processing | | |
| 4 | | | | Reserved | M | X'00' |

As shown in Table II, the UCT Processing Control Triplet defined in Table II is five bytes long. The values of the BiDiCtl and GlyphCtl parameters (byte offsets 2 and 3) respectively control Unicode *bidi* layout processing and Unicode glyph processing for a document. If the value in either byte is hexadecimal 1, denoted X'01', the corresponding one of *bidi* processing or glyph processing is disabled. If either, or both values are hexadecimal 0, denoted X'00', the layout processing of the complex text is controlled by the PTOCA UCT control sequence, as described below in conjunction with the further steps in FIGURE 3.

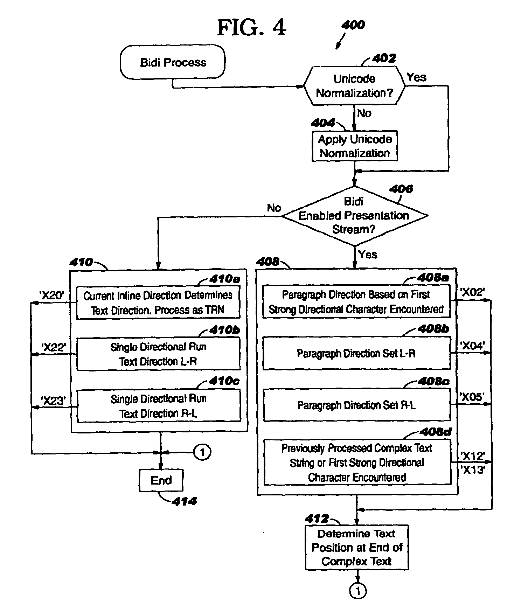

Returning to step 306 of FIGURE 3, if a Unicode presentation control, such as a UCT Processing Control Triplet is contained in the form map, it is determined in step 308 if both *bidi* processing and glyph processing of the complex text are disabled. If so, process 300 returns to step 304 and the code points following the UCT control sequence are processed as normal text, *i.e.* a one to one code point to glyph mapping. If *bidi* processing is not disabled, step 310, the UCT presentation control defers to the PTOCA control sequence, and *bidi* processing proceeds in accordance with the PTOCA UCT control sequence, step 312. A methodology for *bidi* processing using a PTOCA UCT control sequence which may be used in conjunction with step 308 is illustrated in FIGURE 4, described hereinbelow.

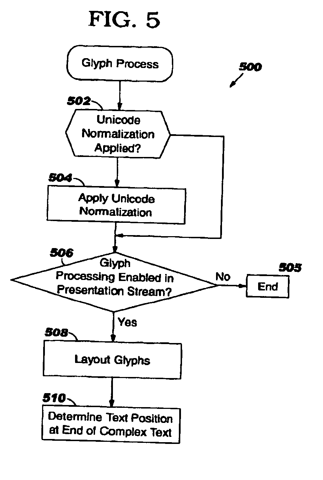

Then, if in step 314, glyph processing is not disabled in the MO:DCA presentation control, glyph processing also proceeds, in step 316, via the PTOCA UCT control sequence. A methodology for glyph processing using a PTOCA UCT control sequence which may be used in conjunction with step 314 is illustrated in FIGURE 5, described hereinbelow. Otherwise, if glyph processing is disabled, step 316 is bypassed, and process 300 terminates in step 305.

Returning to step 310, if *bidi* processing is disabled in the MO:DCA presentation control, then because in step 308 both *bidi* and glyph processing were not disabled (step 308 fell through the "No" branch), glyph processing proceeds, in step 316, via the PTOCA UCT control sequence. (Thai is an example of a language that is written left-to-right, and therefore does not require *bidi* processing but does need glyph processing.) Process 300 then terminates in step 305.

Refer now to FIGURE 4, illustrating, in flow chart form, a process 400 for *bidi* processing under the control of a PTOCA UCT control sequence in accordance with an embodiment of the present invention.

As previously discussed, Unicode character encoding provides the capability to represent, in digital form, all known written languages. For compatibility reasons, the standard may provide for different ways to encode characters, such as composite characters. To ensure that equivalent text will have the same binary representation, the Unicode standard provides for normalization forms that are designed to produce a unique normalized form for any given string. Thus, in step 402, it is determined if the code points in the complex text to be processed are normalized. In an embodiment of the present invention using the UCT control sequence of Table I, this may be determined by testing the CTFLGS parameter. This parameter is a bit-encoded parameter that specifies certain controls for processing Unicode complex text. In particular, for the purpose of step 402, bit 0 indicates whether the code points that follow the UCT control sequence are normalized. In such an embodiment of the present invention a value of binary "0" (denoted B'0') indicates that the code points are not normalized. Conversely, a value of B'1' (binary "1") indicates that the code points to be processed have been normalized by the generator of the text object. If the code points are not normalized, a Unicode normalization is applied in step 404. Any of the Unicode Normalization Forms described in the Unicode Technical Report, Wax-15, "Unicode Normalization Forms," promulgated by the Unicode Consortium, may be used in conjunction with the present invention.

In step 406, it is determined if *bidi* processing is to be applied to the code points following the UCT control sequence. In an embodiment of the present invention using the UCT control sequence of Table I, this may be determined by testing the BIDICT parameter. In such an embodiment, the several alternatives may be specified in processing of the complex text code points, and these alternatives are represented by multiway decision blocks 408 and 410, depending on whether *bidi* processing is enabled. Each of the multiway decisions blocks 408 and 410 correspond to values of the BIDICT parameter in the UCT control sequence. (As would be recognized by persons of ordinary skill in the programming art, many high-level programming languages, such as C or C++, provide for such multiway decision blocks in the form of SWITCH statements. Additionally, in such implementations, decision block 406 may be implemented together with blocks 408 and 410, however in FIGURE 4 these have been illustrated separately for clarity.)

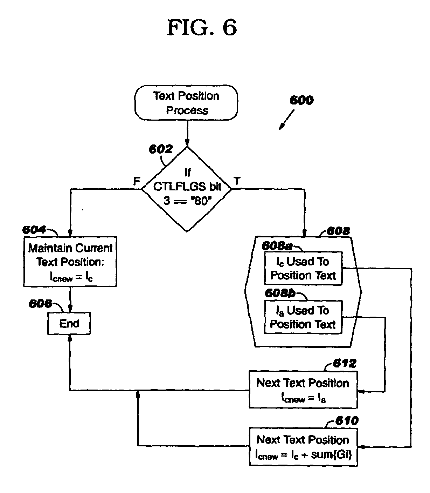

Because of the bidirectional property of Unicode characters, as discussed hereinabove, and the inherent directional property of text paragraphs, it may be desirable to provide directional control within the Unicode processing environment to facilitate the integration of the processing of the complex Unicode text with non-complex text processing. Thus, if *bidi* processing is enabled, (represented by one of the hexadecimal values X'02', X'04', X'05', X'12' and X'13'), in multiway decision block 408, a paragraph direction is set in response to the value of the BIDICT parameter. In step 408a, the paragraph direction is set based on the first strongly directional character encountered in the code point stream. (The Unicode Standard divides Unicode characters into one of several classes, including a strongly directional class.) Step 408a corresponds to a BIDICT parameter value is X'02. In step 408b, the paragraph direction is set left-to-right (L->R). Step 408b corresponds to a BIDICT parameter value of X'04'. In step 408c, the paragraph direction is set right-to-left (R->L). Step 408c corresponds to a BIDICT parameter value of X'05'. In step 408d, the paragraph direction is set using the last processed complex text string in the current text object, otherwise, if the current string is the first complex text string encountered in the text object, the direction is based on the first strongly directional character encountered. Step 408d corresponds to BIDICT parameter values of X'12' and X'13'. If no paragraph direction can be determined, the default is set to one of L->R (X'12') , and R->L (X'13'). In step 412, the text position at the end of the complex text string is determined. A process for determining text position that may be used in conjunction with step 412 is illustrated in FIGURE 6, discussed hereinbelow. Process 400 terminates in step 414.

If *bidi* processing is disabled (represented by one of the hexadecimal values X'20', XS2' and X'23'), paragraph direction information is not used, and in multiway decision block 410, the text direction is set in accordance with one of three values of the BIDICT parameter. In step 410a, the text direction is set to the current inline direction. (The inline direction corresponds to one of two coordinate directions used to place graphic characters, and represents the direction in which successive characters appear in a line of text. The other direction, referred to as the baseline direction represents the direction in which successive lines of text appear on a logical page.) The code points are processed as if they were contained in a TRN control sequence. Step 410a corresponds to a BIDICT parameter value of X'20'. In step 410b, code points are processed in a single directional run from left-to-right, and in step 410c the code points are processed in a single directional run from right-to-left. Steps 410b and 410c respectively correspond to BIDICT parameter values of X'22' and X'23'. Process 400 terminates in step 414.

Refer now to FIGURE 5 illustrating, in flow chart form, a methodology 500 for glyph processing in accordance with an embodiment of the present invention. As previously described in conjunction with steps 402 and 404 of FIGURE 4, the Unicode complex text being processed is normalized, if not already normalized by the formatter, steps 502 and 504.

In step 506, it is determined if glyph processing is to be applied to the code points following the UCT control sequence. In an embodiment of the present invention using the UCT control sequence of Table I, this may be determined by testing the GLYPHCT parameter. A value of X'01'for this parameter denotes that glyph processing is enabled, and process 500 proceeds to step 508. A value of X'20' disables glyph processing, and process 500 terminates, step 505. For example, Hebrew is commonly written without vowel marks. In such circumstances, the text can be rendered correctly by reordering the characters in accordance with the *bidi* process.

In step 508, the glyphs are laid out by invoking a layout engine. The layout engine applies script-specific rules to the Unicode character string. These rules, commonly using additional tables provided within the font, are used to select and position the appropriate glyph. The layout of the glyphs may depend on locale of the end-user community. This may be specified in a MO:DCA structured field that is tied to the PTOCA text object in the data stream wherein the locale reflects the intent of the document creator and may be referred to as the creation locale. If no creation locale is specified, it may be desirable to specify a locale when the job is submitted in a MO:DCA structured field in the form map. Note that a submission locale may be included independently of the presence of a creation locale. Consequently, the locale may be specified in two ways, by a creation locale and a submission locale. If a conflict exists between the two, the creation locale may override the submission locale. Accordingly, a MO:DCA control sequence triplet in accordance with the present inventive principles may be included in the data stream or form map whereby the locale may be passed to the layout engine invoked in step 508. A MO:DCA triplet (Locale Selector Triplet) that may be used is defined in Table III. The syntax of the Locale Selector Triplet conforms to the structure of MO:DCA triplets previously described.

**Table 3**

| Offset | Type | Name | Range | Meaning |
|---|---|---|---|---|
| 0 | UBIN | Tlength | 36-254 | Length of the triplet, including Tlength |
| 1 | CODE | Tid | X' 8C' | Identifies the Locale Selector triplet |
| 2 | | | | Reserved; must be zero |
| 3 | BITS | LocFlgs | | Described below |
| 4-11 | CHAR | LangCde | | Language code as registered in ISO-639; encoding is UTF-16 |
| 12-19 | CHAR | ScrptCde | | Script code as registered in ISO-15924; encoding is UTF-16 |
| 20-27 | CHAR | RegCde | | Region code as registered in ISO-3166; encoding is UTF-16 |
| 28-35 | | | | Reserved; must be zero |
| 36-n | CHAR | VarCde | | Variant code; encoding is UTF-16 |

The locale information is contained in the three parameters, LangCde, ScriptCde and RegCde. The parameter LangCde specifies a language code in accordance with the definition in ISO-639 standard. The parameter ScriptCde specifies an ISO-15924 based script code, and the parameter RegCde specifies a region code in accordance with the ISO-3166 standard. Additionally, the LocFlgs parameter may be used to provide syntax information for the language, script and region code parameters. This is a bit-encoded parameter in which the values of bits 0-3 specifies the language code syntax. If these bits have the value B'000', the language code is not specified, and the parameter language code parameter should be ignored. A value of B'010' denotes that the language code is specified using a two-character language identifier defined in ISO-639-1, and a value of B'011' denotes that the language code is specified using the three-character language identifier defined in ISO-639-2. Similarly, bit 4 identifies the script code syntax, wherein the value of B'0' denotes that the script code is not specified and the script code parameter should be ignored. A value of B'1' denotes that the script code is specified using a four-character script identifier defined in ISO 15924. Bits 5-7 specify a region code syntax in which a value of B'000' again indicates that a region code is not specified and the region code parameter should be ignore. A value of B'010' denotes that the region code is specified using a two-character region identifier defined in ISO-3166-1, and a value of B'011' denotes that the region code is specified using the three-character region identifier defined in ISO-3166-1.

Returning to FIGURE 5, the text position at the end of the complex text is determined in step 510.

Refer now to FIGURE 6 illustrating, in flow chart form, a process 600 for determining the text position at the end of a Unicode complex text string in accordance with the present inventive principles. Process 600 may be used provide an embodiment of step 412, FIGURE 4 and step 510, FIGURE 5. Process 600 operates in conjunction with a UCT control sequence, which may be embodied using the syntax in Table I above.

In particular, the value of bit 3 of the CTFLGS parameter may be used to control text positioning at the completion of the Unicode complex text. In step 602, bit 3 of the CTFLGS parameter is tested, and if the value is B'1', the current inline position is not advanced when the complex text is processed, step 604. Process 600 terminates in step 606. Conversely, if bit 3 of the CTFLGS parameter has the value B'0', a two-way switch is performed, block 608.

In step 608a, if the current position at the start of processing of the complex text, I , was used to position the Unicode complex text, the new position I_{cnew} is determined as the sum of the current position at the start of processing of the complex text, I_{c}, and the sum over all of the increments for the graphemes constituting the Unicode complex text, step 610. The determination in step 608a may be effected by testing bit 1 of the CTFLGS parameter. This bit indicates if the alternate position value (ALTIPOS parameter) is valid. A value of B'0' denotes that the ALTIPOS parameter is invalid, and therefore I_{c} is used to position the complex text.

If, in step 608b, the alternate position, Iₐ, was used to position the text at the start of processing of the complex text (a value of B'1' for CTFLGS parameter bit 1), in step 612, the new position I_{cnew} is set to Iₐ. The alternate inline position may be used whenever the paragraph direction is opposite the current writing mode. The writing mode defines the mode for the setting of text in a writing system, usually corresponding to a nominal direction in which successive graphic characters are formed, for example, left-to-right, right-to-left, top-to-bottom. The writing mode is determined ahead of the UCT control sequence by, for example, the font object architecture for the text objects in the presentation data stream. Consider, for example, rendering a stream of text that is predominantly in English or similar Latin alphabet language that has a left-to-right paragraph direction. The writing mode is left-to-right. The text paragraphs are normally left justified. If, in the text stream a language is encountered that uses a right-to-left paragraph direction, Arabic or Hebrew, for example, the alternate inline position parameter may be used to properly render such text as right justified.

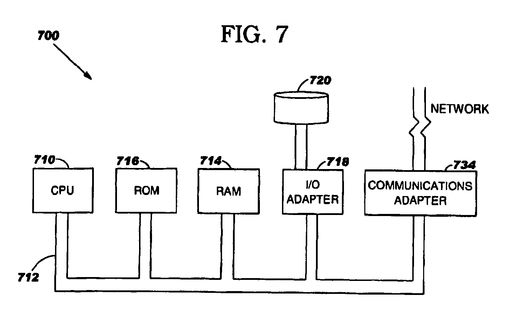

FIGURE7 illustrates an exemplary hardware configuration of data processing system700 in accordance with the subject invention. The system in conjunction with the methodologies illustrated in FIGURES 3-6 may be used to control the processing of, and process, Unicode complex text. Data processing system700 includes central processing unit (CPU)710, such as a conventional microprocessor, and a number of other units interconnected via system bus712. Data processing system 700 also incl udes random access memory (RAM)714, read only memory (ROM)716 and input/ output (I/O) adapter718 for connecting peripheral devices such as nonvolatile storage units720 to bus712. System700 also includes communication adapter734 for connecting data processing system700 to a data processing network, enabling the system to communicate with other systems. CPU710 may include other circuitry not shown herein, which will include circuitry commonly found within a microprocessor, e.g. execution units, bus interface units, arithmetic logic units, etc. CPU710 may also reside on a single integrated circuit.

Preferred implementations of the invention include implementations as a computer system programmed to execute the method or methods described herein, and as a computer program product. According to the computer system implementation, sets of instructions for executing the method or methods are resident in the random access memory714 of one or more computer systems configured generally as described above. These sets of instructions, in conjunction with system components that execute them control the processing of Unicode complex text as described hereinabove. Until required by the computer system, the set of instructions may be stored as a computer program product in another computer memory, for example, in nonvolatile storage unit720 (which may include a removable memory such as an optical disk, floppy disk, CD-ROM, or flash memory for eventual use in nonvolatile storage unit 720). Further, the computer program product can also be stored at another computer and transmitted to the users work station by a network or by an external network such as the Internet. One skilled in the art would appreciate that the physical storage of the sets of instructions physically changes the medium upon which is the stored so that the medium carries computer readable information. The change may be electrical, magnetic, chemical, biological, or some other physical change. While it is convenient to describe the invention in terms of instructions, symbols, characters, or the like, the reader should remember that all of these in similar terms should be associated with the appropriate physical elements.

Note that the invention may describe terms such as comparing, validating, selecting, identifying, or other terms that could be associated with a human operator. However, for at least a number of the operations described herein which form part of at least one of the embodiments, no action by a human operator is desirable. The operations described are, in large part, machine operations processing electrical signals to generate other electrical signals.

## Claims

1. A method of identifying complex text comprising;
if a presentation data stream contains a complex text string, inserting before said complex text string a preselected control in the presentation data stream, wherein the preselected control corresponds to a plurality of parameters for controlling processing of complex text, each parameter represented by a corresponding value in the preselected control, a first parameter having a value indicating a control type for controlling processing of complex text, a second parameter taking one or more values for enabling and disabling the processing of complex text.

2. The method of claim 1 wherein the one or more values for enabling and disabling the processing of complex text comprise a set of values for enabling and disabling a first type of processing of complex text.

3. The method of claim 2 wherein the first type of processing of complex text comprises bidirectional *(bidi)* processing.

4. The method of claim 2 wherein the plurality of parameters further includes a third parameter, wherein the third parameter takes one or more values for enabling and disabling a second type of processing of complex text.

5. The method of claim 4 wherein the second type of processing of complex text comprises glyph processing.

6. The method of claim 1 wherein the plurality of parameters further includes a third parameter, the third parameter taking a value comprising an alternate text position.

7. A method for processing complex text comprising:
responsive to a first predetermined type of control in a presentation data stream, wherein the first predetermined type of control includes a first parameter represented by a corresponding value in the first predetermined type of control for controlling a first type of complex text processing:
determining if a first type of complex text processing is enabled;
applying the first type of complex text processing to a complex text string succeeding said first predetermined type of control in the presentation data stream, if the first type of complex text processing is enabled.

8. The method of claim 7 wherein the first type of complex text processing comprises bidirectional *(bidi)* processing.

9. The method of claim 8 wherein the first parameter takes one or more values for enabling and disabling the processing of complex text, and wherein the one or more values for enabling and disabling the processing of complex text includes one or more values for determining a paragraph direction for the bidirectional processing of the complex text.

10. The method of claim 7 wherein the first predetermined type of control includes a second parameter represented by a corresponding value in the predetermined type of control for controlling a second type of complex text processing, the method further comprising:
determining if a second type of complex text processing is enabled;
applying the second type of complex text processing to the complex text string succeeding said first predetermined type of control in the presentation data stream, if the second type of complex text processing is enabled.

11. The method of claim 10 wherein the second type of complex text processing comprises glyph processing.

12. The method of claim 7 further comprising:
responsive to a second predetermined type of control in the presentation data stream, the second predetermined type of control including a parameter represented by a corresponding value in the second predetermined type of control operable for disabling the first type of complex text processing:
determining if the first type of complex text processing is disabled; and if the first type of complex text processing is disabled, overriding said step of applying the first type of complex text processing to the complex text string.

13. The method of claim 7 wherein the first predetermined type of control includes a second parameter represented by a corresponding value in the first predetermined type of control for determining an alternate text position, the method including setting a text position using said alternate text position if the first type of complex text processing is enabled.

14. A machine readable computer program product including programming for identifying complex text comprising programming instructions for:
if a presentation data stream contains a complex text string, inserting before said complex text string a preselected control in the presentation data stream, wherein the preselected control corresponds to a plurality of parameters for controlling processing of complex text, each parameter represented by a corresponding value in the preselected control, a first parameter having a value indicating a control type for controlling processing of complex text, a second parameter taking one or more values for enabling and disabling the processing of complex text.

15. A machine readable computer program product including programming for processing complex text comprising programming instructions for:
responsive to a first predetermined type of control in a presentation data stream, wherein the first predetermined type of control includes a first parameter represented by a corresponding value in the first predetermined type of control for controlling a first type of complex text processing:
determining if a first type of complex text processing is enabled;
applying the first type of complex text processing to a complex text string succeeding said first predetermined type of control in the presentation data stream, if the first type of complex text processing is enabled.

16. A data processing system for identifying complex text comprising:
circuitry operable for, if a presentation data stream contains a complex text string, inserting before said complex text string a preselected control in the presentation data stream, wherein the preselected control corresponds to a plurality of parameters for controlling processing of complex text, each parameter represented by a corresponding value in the preselected control, a first parameter having a value indicating a control type for controlling processing of complex text, a second parameter taking one or more values for enabling and disabling the processing of complex text.

17. A data processing system for processing complex text comprising:
circuitry for controlling a first type of complex text processing in response to a first predetermined type of control in a presentation data stream, wherein the first predetermined type of control includes a first parameter represented by a corresponding value in the first predetermined type of control:
circuitry operable for determining if a first type of complex text processing is enabled;
circuitry operable for applying the first type of complex text processing to a complex text string succeeding said first predetermined type of control in the presentation data stream, if the first type of complex text processing is enabled.

18. The data processing system of claim 17 wherein the first predetermined type of control includes a second parameter represented by a corresponding value in the predetermined type of control for controlling a second type of complex text processing, the system further comprising:
circuitry operable for determining if a second type of complex text processing is enabled;
circuitry operable for applying the second type of complex text processing to the complex text string succeeding said first predetermined type of control in the presentation data stream, if the second type of complex text processing is enabled.

## Patentansprüche

1. Verfahren zum Identifizieren eines komplexen Textes, enthaltend:
wenn ein Präsentations-Datenstrom einen komplexen Textstrang enthält, das Einfügen eines vorgewählten Steuerbefehls vor den komplexen Textstrang in den Präsentations-Datenstrom, wobei der vorgewählte Steuerbefehl mehreren Parametern zum Steuern der Verarbeitung von komplexem Text entspricht, jeder Parameter durch einen entsprechenden Wert in dem vorgewählten Steuerbefehl repräsentiert ist, ein erster Parameter einen Wert hat, der einen Steuertyp zum Steuern der Verarbeitung des komplexen Textes angibt und ein zweiter Parameter einen oder mehrere Werte annimmt, um die Verarbeitung von komplexem Text freizugeben oder zu sperren.

2. Verfahren nach Anspruch 1, bei dem der eine oder mehrere Wert(e) zum Freigeben und Sperren der Verarbeitung von komplexem Text einen Satz Werte zum Freigeben und Sperren eines ersten Verarbeltungstyps von komplexem Text enthält/enthalten.

3. Verfahren nach Anspruch 2, bei dem der erste Verarbeltungstyp von komplexem Text bidirektionale *(bidi)* Verarbeitung umfasst.

4. Verfahren nach Anspruch 2, bei dem die mehreren Parameter weiterhin einen dritten Parameter enthalten, der einen oder mehrere Werte zum Freigeben und Sperren eines zweiten Verarbeitungstyps von komplexem Text annimmt.

5. Verfahren nach Anspruch 4, bei dem der zweite Verarbeitungstyp von komplexem Text die Verarbeitung von Bildzeichen enthält.

6. Verfahren nach Anspruch 1, bei dem die mehreren Parameter weiter einen dritten Parameter enthalten, der einen Wert annimmt, die eine wechselnde Textposition enthält.

7. Verfahren zum Verarbeiten von komplexem Text, enthaltend:
Im Ansprechen auf einen ersten vorbestimmten Typ von Steuerbefehl in einem Präsentations-Datenstrom, wobei der erste vorbestimmte Typ von Steuerbefehl einen ersten Parameter enthält, der durch einen entsprechenden Wert In dem ersten vorbestimmten Typ von Steuerbefehl zum Steuern des ersten Verarbeitungstyps von komplexem Text repräsentiert Ist:
das Ermitteln, ob ein erster Verarbeitungstyp von komplexem Text freigegeben ist;
das Anwenden des ersten Verarbeitungstyps von komplexem Text an einem komplexen Textstrang, der dem ersten vorbestimmten Typ von Steuerbefehl Im Präsentations-Datenstrom folgt, wenn der erste Verarbeitungstyp von komplexem Text freigegeben ist.

8. Verfahren nach Anspruch 7, bei dem der erste Verarbeitungstyp von komplexem Text eine bidirektionale (*bidi*) Verarbeitung umfasst.

9. Verfahren nach Anspruch 8, bei dem der erste Parameter einen oder mehrere Werte zum Freigeben und Sperren der Verarbeitung von komplexem Text annimmt, und wobei der eine oder die Wert(e) zum Freigeben und Sperren der Verarbeitung von komplexem Text einen oder mehrere Werte zum Bestimmen einer Paragraphenrichtung für die bidirektionale Verarbeitung von komplexem Text enthält/enthalten.

10. Verfahren nach Anspruch 7, bei dem der erste vorbestimmte Typ von Steuerbefehl einen zweiten Parameter enthält, der durch einen entsprechenden Wert in dem vorbestimmten Typ von Steuerbefehl repräsentiert ist, zum Steuern eines zweiten Verarbeitungstyps von komplexem Text, wobei das Verfahren weiterhin enthält:
das Ermitteln, ob ein zweiter Verarbeltungstyp von komplexem Text freigegeben Ist;
das Anwenden des zweiten Verarbeitungstyps von komplexem Text an dem komplexen Textstrang, der dem ersten vorbestimmten Typ von Steuerbefehl im Präsentations-Datenstrom folgt, wenn der zweite Verarbeitungstyp von komplexem Text freigegeben ist.

11. Verfahren nach Anspruch 10, bei dem der zweite Verarbeitungstyp von komplexem Text die Verarbeitung von Bildzeichen enthält.

12. Verfahren nach Anspruch 7, weiterhin enthaltend:
Im Ansprechen auf einen zweiten vorbestimmten Typ von Steuerbefehl Im Präsentations-Datenstrom, wobei der zweite vorbestimmte Typ von Steuerbefehl einen Parameter enthält, der durch einen entsprechenden Wert in dem zweiten vorbestimmten Typ von Steuerbefehl, der zum Sperren des ersten Verarbeitungstyps von komplexem Text betreibbar ist, repräsentiert Ist:
das Ermitteln, ob der erste Verarbeitungstyp von komplexem Text gesperrt ist, und wenn der erste Verarbeitungstyp von komplexem Text gesperrt ist, das Hinwegsetzen über den Schritt des Anwendens des ersten Verarbeitungstyps von komplexem Text an dem komplexen Textstrang.

13. Verfahren nach Anspruch 7, bei dem der erste vorbestimmte Typ von Steuerbefehl einen zweiten Parameter enthält, der durch einen entsprechenden Wert in dem ersten vorbestimmten Typ von Steuerbefehl repräsentiert ist, zum Bestimmen einer wechselnden Textposition, wobei das Verfahren das Einstellen einer Textposition unter Verwendung der wechselnden Textposition umfasst, wenn der erste Verarbeitungstyp von komplexem Text freigegeben ist.

14. Maschinen-lesbares Rechnerprogramm, enthaltend eine Programmierung für das Identifizieren von komplexem Text mit Programmierbefehlen für:
wenn ein Präsentations-Datenstrom einen komplexen Textstrang enthält, das Einfügen eines vorgewählten Steuerbefehls in den Präsentations-Datenstrom vor dem komplexen Textstrang, wobei der vorgewählte Steuerbefehl mehreren Parametern zum Steuern der Verarbeitung von komplexem Text entspricht, jeder Parameter durch einen entsprechenden Wert in dem vorgewählten Steuerbefehl repräsentiert ist, ein erster Parameter einen Wert hat, der einen Steuertyp zum Steuern der Verarbeitung von komplexem Text angibt, und ein zweiter Parameter einen oder mehrere Wert(e) zum Freigeben und Sperren der Verarbeitung von komplexem Text annimmt.

15. Maschinen-lesbares Rechnerpürogramm, enthaltend eine Programmierung für die Verarbeitung von komplexem Text mit Programmierbefehlen für:
ansprechend auf einen ersten vorbestimmten Typ von Steuerbefehl In einem Präsentations-Datenstrom, wobei der erste vorbestimmte Typ von Steuerbefehl einen ersten Parameter enthält, der durch einen entsprechenden Wert in dem ersten vorbestimmten Typ von Steuerbefehl repräsentiert ist, zum Steuern eines ersten Verarbeitungstyps von komplexem Text:
das Ermitteln, ob ein erster Verarbeitungstyp von komplexem Text freigegeben Ist:
das Anwenden des ersten Verarbeitungstyps von komplexem Text auf einen komplexen Textstrang, der dem ersten vorbestimmten Typ von Steuerbefehl im Präsentations-Datenstrom folgt, wenn der erste Verarbeitungstyp von komplexem Text freigegeben ist.

16. Datenverarbeitungssystem zum Identifizieren von komplexem Text, enthaltend:
eine Schaltung, die für das Einfügen eines vorgewählten Steuerbefehls in den Präsentations-Datenstrom vor dem komplexen Textstrang betreibbar ist, wenn ein Präsentations-Datenstrom einen komplexen Textstrang enthält, wobei der vorgewählte Steuerbefehl mehreren Parametern zum Steuern der Verarbeitung von komplexem Text entspricht, jeder Parameter durch einen entsprechenden Wert in dem vorgewählten Steuerbefehl repräsentiert ist, ein erster Parameter einen Wert hat, der einen Steuertyp zum Steuern der Verarbeitung von komplexem Text hat und ein zweiter Parameter einen oder mehrere Wert(e) zum Freigeben oder Sperren der Verarbeitung von komplexem Text annimmt.

17. Datenverarbeitungssystem zum Verarbeiten von komplexem Text, enthaltend:
eine Schaltung zum Steuern eines ersten Verarbeitungstyps von komplexem Text im Ansprechen auf einen ersten vorbestimmten Typ von Steuerbefehl in einem Präsentations-Datenstrom, wobei der erste vorbestimmte Typ von Steuerbefehl einen ersten Parameter enthält, der durch einen entsprechenden Wert in dem ersten vorbestimmten Typ von Steuerbefehl repräsentiert wird;
eine Schaltung, die zum Ermitteln betreibbar ist, ob ein erster Verarbeitungstyp von komplexem Text freigegeben ist;
eine Schaltung, die zum Anwenden des ersten Verarbeltungstyps von komplexem Text an einem komplexen Textstrang, der dem ersten vorbestimmten Typ von Steuerbefehl in dem Präsentations-Datenstrom folgt, betreibbar ist, wenn der erste Verarbeitungstyp von komplexem Text freigegeben ist.

18. Datenverarbeitungssystem nach Anspruch 17, bei dem der erste vorbestimmte Typ von Steuerbefehl einen zweiten Parameter enthält, der durch einen entsprechenden Wert in dem vorbestimmten Typ von Steuerbefhel repräsentiert ist, zum Steuern eines zweiten Verarbeitungstyps von komplexem Text, wobei das System weiterhin enthält:
eine Schaltung, die zum Ermitteln betreibbar ist, ob ein zweiter Verarbeitungstyp von komplexem Text freigegeben ist;
eine Schaltung, die zum Anwenden des zweiten Verarbeitungstyps von komplexem Text an dem komplexen Textstrang, der dem ersten vorbestimmten Steuerbefehl im Präsentations-Datenstrom folgt, betreibbar ist, wenn der zweite Verarbeitungstyp von komplexem Text freigegeben ist.

## Revendications

1. Procédé d'identification de texte complexe comprenant :
si un flux de données de présentation contient une chaîne de texte complexe, l'insertion avant ladite chaîne de texte complexe d'une commande présélectionnée dans le flux de données de présentation, dans lequel la commande présélectionnée correspond à une pluralité de paramètres destinés à commander un traitement de texte complexe, chaque paramètre étant représenté par une valeur correspondante dans la commande présélectionnée, un premier paramètre ayant une valeur indiquant un type de commande destiné à commander un traitement de texte complexe, un deuxième paramètre prenant une ou plusieurs valeurs destinées à activer et à désactiver le traitement de texte complexe.

2. Procédé selon la revendication 1, dans lequel la ou les valeurs destinées à activer et à désactiver le traitement de texte complexe (comprend) comprennent un ensemble de valeurs destinées à activer et à désactiver un premier type de traitement de texte complexe.

3. Procédé selon la revendication 2, dans lequel le premier type de traitement de texte complexe comprend un traitement bidirectionnel (bidl).

4. Procédé selon la revendication 2, dans lequel la pluralité de paramètres comprend en outre un troisième paramètre, dans lequel le troisième paramètre prend une ou plusieurs valeurs destinées à activer et à désactiver un deuxième type de traitement de texte complexe.

5. Procédé selon la revendication 4, dans lequel le deuxième type de traitement de texte complexe comprend un traitement de glyphes.

6. Procédé selon la revendication 1, dans lequel la pluralité de paramètres comprend en outre un troisième paramètre, le troisième paramètre prenant une valeur comprenant une autre position de texte.

7. Procédé de traitement de texte complexe comprenant :
en réponse à un premier type de commande prédéterminé dans un flux de données de présentation, dans lequel le premier type de commande prédéterminé comprend un premier paramètre représenté par une valeur correspondante dans le premier type de commande prédéterminé destiné
à commander un premier type de traitement de texte complexe :
le fait de déterminer si un premier type de traitement de texte complexe est activé ;
l'application du premier type de traitement de texte complexe à une chaîne de texte complexe succédant audit premier type de commande prédéterminé dans le flux de données de présentation, si le premier type de traitement de texte complexe est activé.

8. Procédé selon la revendication 7, dans lequel le premier type de traitement de texte complexe comprend un traitement bidirectionnel (bidi).

9. Procédé selon la revendication 8, dans lequel le premier paramètre prend une ou plusieurs valeurs destinées à activer et à désactiver le traitement de texte complexe, et dans lequel la ou les valeurs destinées à activer et à désactiver le traitement de texte complexe (comprend) comprennent une ou plusieurs valeurs destinées à déterminer une direction de paragraphe pour le traitement bidirectionnel du texte complexe.

10. Procédé selon la revendication 7, dans lequel le premier type de commande prédéterminé comprend un deuxième paramètre représenté par une valeur correspondante dans le type de commande prédéterminé destiné à commander un deuxième type de traitement de texte complexe, le procédé comprenant en outre :
le fait de déterminer si un deuxième type de traitement de texte complexe est activé ;
l'application du deuxième type de traitement de texte complexe à la chaîne de texte complexe succédant audit premier type de commande prédéterminé dans le flux de données de présentation, si le deuxième type de traitement de texte complexe est activé.

11. Procédé selon la revendication 10, dans lequel le deuxième type de traitement de texte complexe comprend un traitement de glyphes.

12. Procédé selon la revendication 7 comprenant en outre :
en réponse à un deuxième type de commande prédéterminé dans le flux de données de présentation, le deuxième type de commande prédéterminé comprenant un paramètre représenté par une valeur correspondante dans le deuxième type de commande prédéterminé qui peut servir à désactiver le premier type de traitement de texte complexe :
le fait de déterminer si le premier type de traitement de texte complexe est désactivé ; et, si le premier type de traitement de texte complexe est désactivé, l'omission de ladite étape d'application du premier type de traitement de texte complexe à la chaîne de texte complexe.

13. Procédé selon la revendication 7, dans lequel le premier type de commande prédéterminé comprend un deuxième paramètre représenté par une valeur correspondante dans le premier type de commande prédéterminé destiné à déterminer une autre position de texte, le procédé comprenant la fixation d'une position de texte en utilisant ladite autre position de texte si le premier type de traitement de texte complexe est activé.

14. Produit de programme informatique lisible par une machine comprenant une programmation destinée à identifier un texte complexe comprenant des instructions de programmation pour :
si un flux de données de présentation contient une chaîne de texte complexe, Insérer avant ladite chaîne de texte complexe une commande présélectionnée dans le flux de données de présentation, dans lequel la commande présélectionnée correspond à une pluralité de paramètres destinés à commander un traitement de texte complexe, chaque paramètre étant représenté par une valeur correspondante dans la commande présélectionnée, un premier paramètre ayant une valeur indiquant un type de commande destiné à commander un traitement de texte complexe, un deuxième paramètre prenant une ou plusieurs valeurs destinées à activer et à désactiver le traitement de texte complexe.

15. Produit de programme informatique lisible par une machine comprenant une programmation destinée à traiter un texte complexe comprenant des instructions de programmation pour :
en réponse à un premier type de commande prédéterminé dans un flux de données de présentation, dans lequel le premier type de commande prédéterminé comprend un premier paramètre représenté par une valeur correspondante dans le premier type de commande prédéterminé destiné à commander un premier type de traitement de texte complexe :
le fait de déterminer si un premier type de traitement de texte complexe est activé;
l'application du premier type de traitement de texte complexe à une chaîne de texte complexe succédant audit premier type de commande prédéterminé dans le flux de données de présentation, si le premier type de traitement de texte complexe est activé.

16. Système de traitement de données destiné à identifier un texte complexe comprenant :
un ensemble de circuits qui peut servir, si un flux de données de présentation contient une chaîne de texte complexe, à Insérer avant ladite chaîne de texte complexe une commande présélectionnée dans le flux de données de présentation, dans lequel la commande présélectionnée correspond à une pluralité de paramètres destinés à commander un traitement de texte complexe, chaque paramètre étant représenté par une valeur correspondante dans la commande présélectionnée, un premier paramètre ayant une valeur indiquant un type de commande destiné à commander un traitement de texte complexe, un deuxième paramètre prenant une ou plusieurs valeurs destinées à activer et à désactiver le traitement de texte complexe.

17. Système de traitement de données destiné à traiter un texte complexe comprenant :
un ensemble de circuits destiné à commander un premier type de traitement de texte complexe en réponse à un premier type de commande prédéterminé dans un flux de données de présentation, dans lequel le premier type de commande prédéterminé comprend un premier paramètre représenté par une valeur correspondante dans le premier type de commande prédéterminé ;
un ensemble de circuits qui peut servir à déterminer si un premier type de traitement de texte complexe est activé ;
un ensemble de circuits qui peut servir à appliquer le premier type de traitement de texte complexe à une chaîne de texte complexe succédant audit premier type de commande prédéterminé dans le flux de données de présentation, si le premier type de traitement de texte complexe est activé.

18. Système de traitement de données selon la revendication 17, dans lequel le premier type de commande prédéterminé comprend un deuxième paramètre représenté par une valeur correspondante dans le type de commande prédéterminé destiné à commander un deuxième type de traitement de texte complexe, le système comprenant en outre :
un ensemble de circuits qui peut servir à déterminer si un deuxième type de traitement de texte complexe est activé ;
un ensemble de circuits qui peut servir à appliquer le deuxième type de traitement de texte complexe à la chaîne de texte complexe succédant audit premier type de commande prédéterminé dans le flux de données de présentation, si le deuxième type de traitement de texte, complexe est activé.
